# EUROPÄISCHE PATENTANMELDUNG

(11) **EP 2 517 605 A1**
(43) Veröffentlichungstag der Anmeldung: **31.10.2012**
(21) Anmeldenummer: 12164614.5
(22) Anmeldetag: 18.04.2012
(51) Int. Cl.: A47B 95/00

(54) **Hängeschrank mit Beschlägen zur Verstärkung seiner mit Aufhängevorrichtungen versehenen oberen, hinteren Eckbereiche**

(30) Priorität: 28.04.2011 DE 102011002318
(71) Anmelder: Hettich-Heinze GmbH & Co. KG, 32139 Spenge (DE)
(72) Erfinder: Hellmann, Jürgen, 33619 Bielefeld (DE); Karrasch, Thorsten, 32049 Herford (DE); Montecchio, Andreas, 32105 Bad Salzuflen (DE); Nolte, Frank, 49086 Osnabrück (DE)
(74) Vertreter: Dantz, Jan Henning

(57) **Zusammenfassung**

Ein Hängeschrank (1) mit Beschlägen (7) zur Verstärkung seiner mit Aufhängevorrichtungen (5) versehenen oberen, hinteren Eckbereiche, wobei die Aufhängevorrichtungen (5) jeweils mit einem Aufhängehaken (6) versehen sind, ist so ausgebildet, dass jeder Beschlag (7) mindestens ein an einer Seitenwand (2) festgelegtes Tragteil (8) und wenigstens ein an einem Oberboden (3) festgelegtes oder den Oberboden (3) nach oben abstützend angeordnetes Halteteil (9) aufweist und dass jeder Beschlag (7) ein Abstützelement (11) aufweist, welches oberhalb des Aufhängehakens (6) angeordnet ist.

## Beschreibung

Die vorliegende Erfindung betrifft einen Hängeschrank mit Beschlägen zur Verstärkung seiner mit Aufhängevorrichtungen versehenen oberen, hinteren Eckbereiche, wobei die Aufhängevorrichtungen jeweils mit einem Aufhängehaken versehen sind.

Bei Hängeschranken der gattungsgemäßen Art ist deren Belastbarkeit im Wesentlichen von der Stabilität der Aufhängevorrichtungen selbst wie auch von der Stabilität der oberen, hinteren Eckbereiche abhängig. Dies liegt daran, dass die Kräfte durch die Gewichtsbelastung über die Aufhängevorrichtungen in den Oberboden und die Seitenwände eines Hängeschrankes eingeleitet werden. Selbst bei Aufhängevorrichtungen, die an sich hohe Traglasten aufnehmen können, kann ein Hängeschrank bei zu hoher Belastung im Kraftübertragungsbereich bei nicht ausreichender Stabilisierung der Eckbereiche beschädigt und/oder zerstört werden mit entsprechend nachteiligen Folgen.

Der vorliegenden Erfindung liegt die Aufgabe zugrunde, einen Hängeschrank der gattungsgemäßen Art mit einfachen und preiswerten Mitteln im Eckbereich deutlich zu verstärken und zu stabilisieren.

Diese Aufgabe wird erfindungsgemäß dadurch gelöst, dass jeder Beschlag wenigstens ein an einer Seitenwand festgelegtes Tragteil und wenigstens ein an einem Oberboden festgelegtes oder den Oberboden nach oben abstützend angeordnetes Halteteil aufweist und dass jeder Beschlag ein Abstützelement aufweist, welches oberhalb des Aufhängehakens angeordnet ist.

Derartige Beschläge sind einfach und preiswert herstellbar und gewährleisten eine extrem hohe Stabilität und Versteifung der Eckbereiche eines Hängeschrankes, insbesondere wird hierbei sichergestellt, dass die von den Aufhängevorrichtungen übertragenen Kräfte im Wesentlichen über den Oberboden in die Seitenwände eingeleitet werden, so dass ein Ausbrechen oder nach oben Drücken des Oberbodens eines mit solchen Beschlägen versehenen Hängeschrankes praktisch auch bei hohen Belastungen verhindert ist.

Für den Fall, dass eine Überbelastung des Hängeschrankes eintritt, wird ein Herunterfallen des überbelasteten Hängeschrankes immer noch sicher vermieden, da sich bei Überbelastung des Hängeschrankes und der daraus folgenden Absenkung desselben die Abstützelemente der Beschläge auf den Aufhängehaken zusätzlich abstützen und somit den Hängeschrank abstützend halten.

Bei einer Überbelastung eines Hängeschrankes ohne die erfindungsgemäßen Beschläge, verformt sich der Schrankaufhänger und leitet somit ein Hochdrückens des Oberbodens ein, was schließlich zum Materialversagen führen kann.

Weitere Merkmale der Erfindung sind Gegenstand von Unteransprüchen.

Ein Ausführungsbeispiel der Erfindung ist in den beigefügten Zeichnungen dargestellt und wird im Folgenden näher beschrieben.

Es zeigen:
- Figur 1: eine teilweise dargestellte Rückansicht eines erfindungsgemäßen Hängeschrankes
- Figur 2: eine Teilansicht in Richtung des Pfeiles II in Figur 1
- Figur 3: eine Teilansicht in Richtung des Pfeiles III in Figur 1
- Figur 4: eine perspektivische Teildarstellung des in den Figuren 1-3 gezeigten oberen Eckbereiches des Hängeschrankes

- Figuren 5 und 6: vergrößert dargestellte perspektivische Ansichten aus verschiedenen Blickrichtungen im Bereich einer oberen Ecke des Hängeschrankes
- Figuren 7-10: den Figuren 5-6 entsprechende unterschiedliche Perspektivdarstellungen des Eckbereiches im Falle einer extremen Gewichtsbelastung des Hängeschrankes.

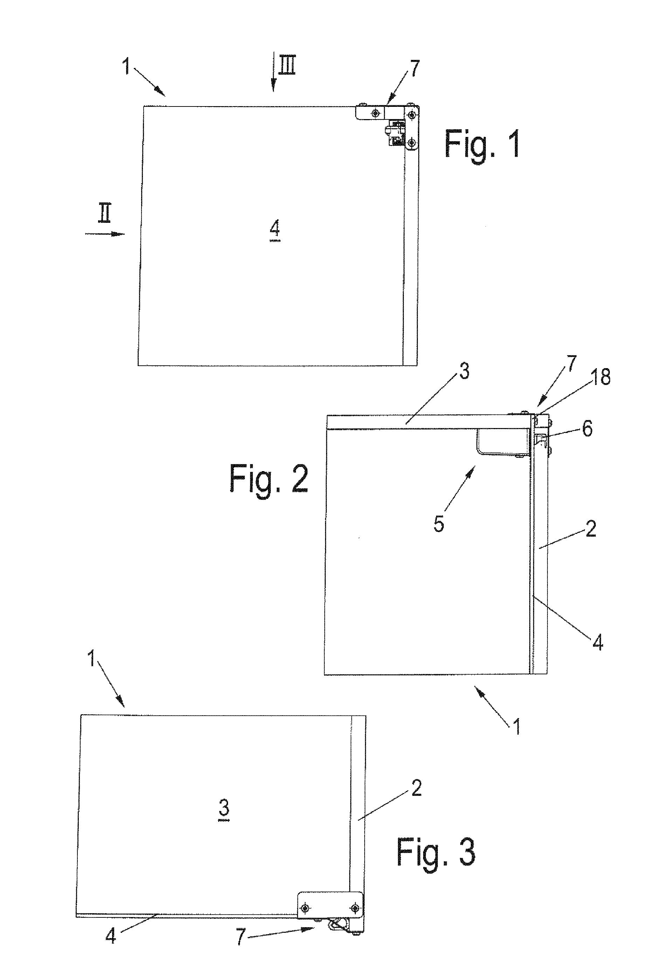

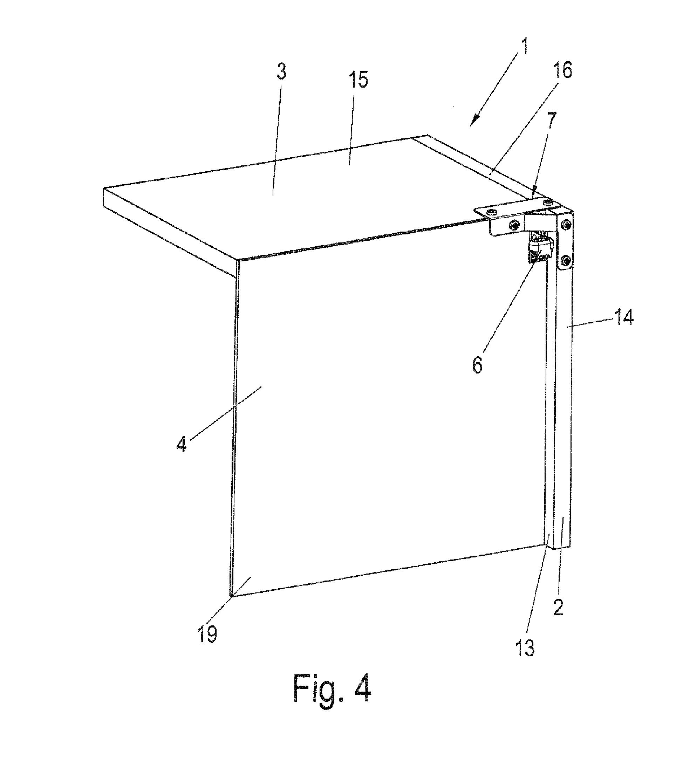

In den Figuren 1-4 ist mit dem Bezugszeichen 1 insgesamt ein nur teilweise dargestellter Hängeschrank bezeichnet, der in an sich bekannter Weise zwei Seitenwände 2 (von denen nur eine dargestellt ist), einen Oberboden 3 und eine Rückwand 4 aufweist, wobei auf die Darstellung eines Unterbodens hier verzichtet wurde, da dieser im Zusammenhang mit der vorliegenden Erfindung nicht von Belang ist.

Im oberen Eckbereich zwischen der Seitenwand 2 und dem Oberboden 3 ist in an sich bekannter Weise eine Aufhängevorrichtung 5 montiert, welche mit einem die Rückwand 4 durchtretenden Aufhängehaken 6 versehen ist.

Gleiches gilt selbstverständlich für die in den Zeichnungen nicht dargestellte weitere obere Ecke des Hängeschrankes 1.

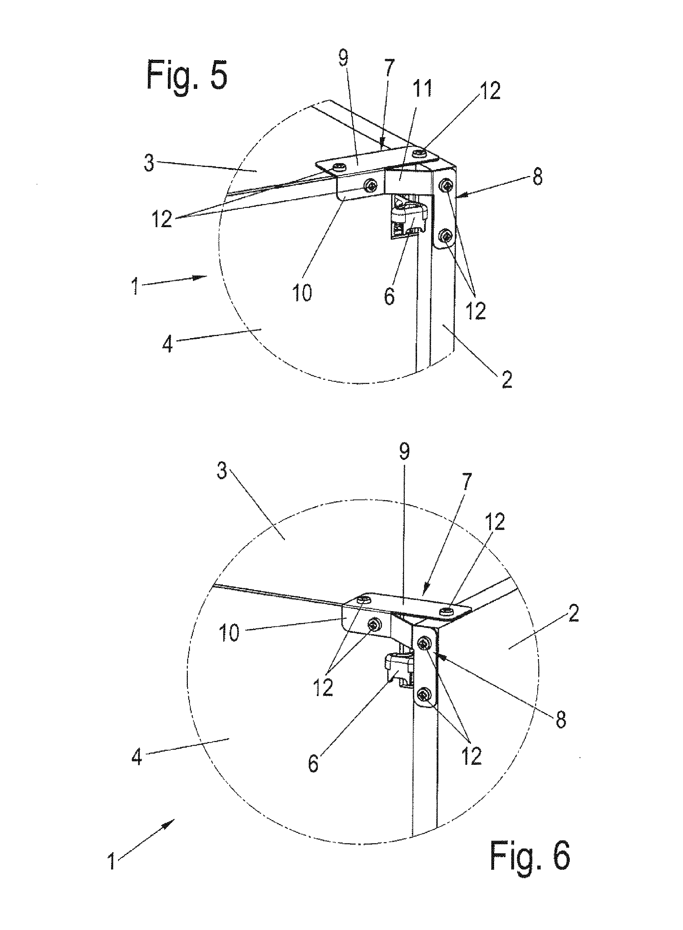

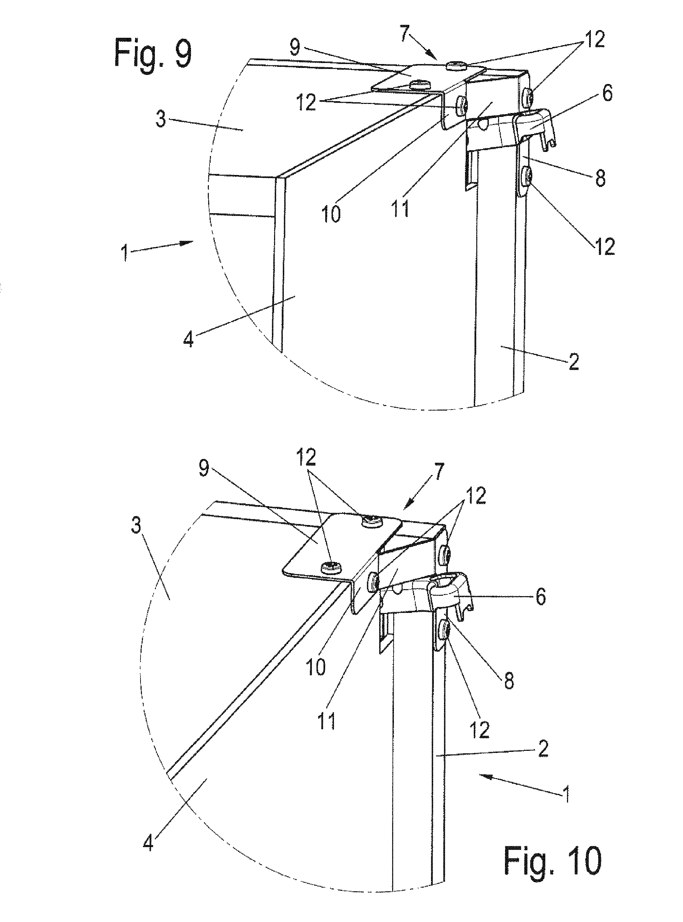

Wie aus den Figuren 1-4, insbesondere aber aus den Figuren 5-10 hervorgeht, ist der obere Eckbereich verstärkt durch einen Beschlag 7, dessen Aufbau sich in anschaulicher Weise aus den Figuren 5-10 ergibt.

Der Beschlag 7 umfasst wenigstens ein Tragteil 8, ein Halteteil 9 und ein Abstützelement 11 und kann zusätzlich mit einem abgekanteten Winkelteil 10 verstärkt sein.

Insgesamt ist der Beschlag 7 einstückig gefertigt, bevorzugt aus Metall.

Das Halteteil 9 ist in der Regel so an dem Tragteil 8 angeordnet, dass sich das Widerstandsmoment senkrecht zum Tragteil 8 erhöht.

Das Tragteil 8 ist in den dargestellten Ausführungsbeispielen an der Rückseite 14 einer Seitenwand 2 festgelegt, kann im Rahmen der Erfindung aber auch an einer anderen Fläche, beispielsweise an einer Innenseite 13 der Seitenwand 2 festgelegt sein, das Halteteil 9 ist mit der Oberseite 15 des Oberbodens 3 und vorteilhafterweise noch zusätzlich mit der Oberseite 16 der Seitenwand 2 fest verbunden und das Winkelteil 10 ist an der Rückseite 17 der Rückwand 4 mit dieser fest verbunden. Das Winkelteil 10 kann aber auch direkt an der Rückseite 18 des Oberbodens 3 befestigt sein.

Die Verbindung der besagten Einzelheiten des Beschlages 7 mit den entsprechenden Gegenstücken auf der Schrankseite erfolgt über Befestigungsschrauben 12. Das Abstützelement 11, welches oberhalb der Aufhängevorrichtung 5 und oberhalb dessen Aufhängehakens 6 angeordnet ist, verbindet das Tragteil 8 mit dem Winkelteil 10. Das Abstützelement 11 kreuzt den unter ihm angeordneten Aufhängehaken 6 der Aufhängevorrichtung 5, was beispielsweise die Figuren 5 und 6 sehr deutlich zeigen.

Der Beschlag 7 ist bei den dargestellten Ausführungsbeispielen durch Schrauben festgelegt. Alternativ bieten sich auch andere Festlegungsmöglichkeiten wie nageln, kleben, einschlagen, clipsen oder andere im Stand der Technik bekannte Verbindungsmöglichkeiten an.

Sofern der Hängeschrank, wie in den Figuren dargestellt, über eine Rückwand 4 verfügt, ist diese im jeweiligen oberen Eckbereich des Schrankes vorzugsweise zwischen dem Winkelteil 10 und der Rückseite des Oberbodens 3 angeordnet, so dass der Beschlag 7 mittels des Winkelteils 10 weiterhin fest mit dem Oberboden 3 verbunden ist, wobei die Schrauben die Rückwand 4 durchdringen. Alternativ kann die Rückwand 4 an der Position des Winkelteils 10 eine Ausnehmung aufweisen, so dass das Winkelteil 10 trotz vorhandener Rückwand 4 unmittelbar an der Rückseite des Oberbodens 3 anliegt.

Durch die Festlegung des Beschlages 7 an der Seitenwand 2, dem Oberboden 3 und sowie gegebenenfalls unter zusätzlicher Einbeziehung der Rückwand 4, wird eine enorme Versteifung und Verwindungsfähigkeit des Eckbereiches des Hängeschrankes 1 erzielt, insbesondere wird sichergestellt, dass die vertikalen Kräfte bei entsprechend vertikaler Belastung des Hängeschrankes 1 überwiegend in die Seitenwand 2 bzw. in die beiden Seitenwände 2 eingeleitet werden und somit eine Überbelastung des Oberbodens 3 aufgrund der Gewichtsbelastung vermieden wird.

Somit kann ein entsprechend ausgestatteter Hängeschrank 1 durchaus höher belastet werden, als dies aufgrund der Auslegung einer entsprechenden Aufhängevorrichtung 5 alleine möglich wäre.

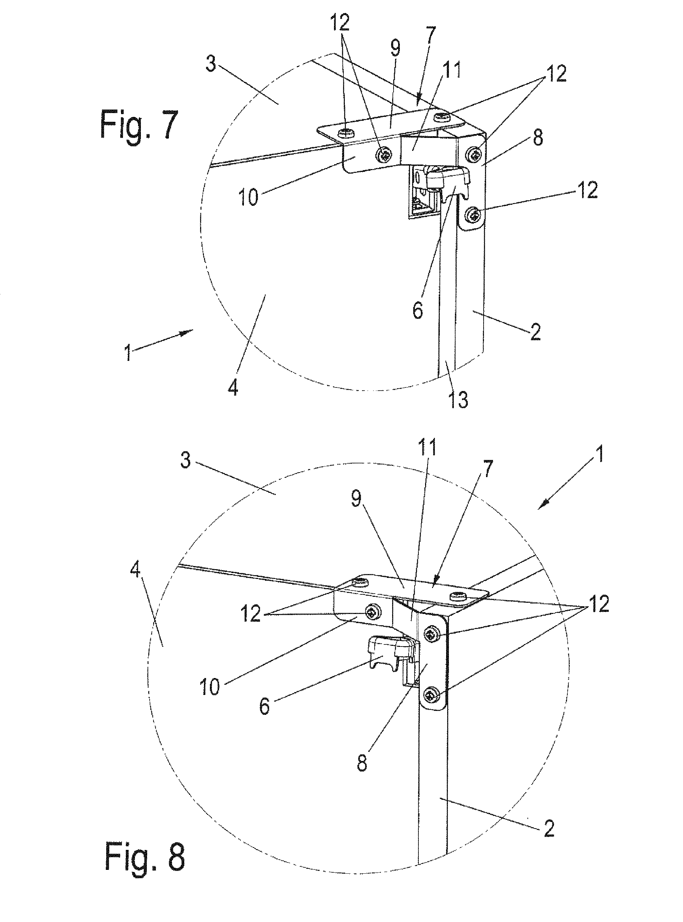

Sollte aus Unachtsamkeit doch einmal eine Überbelastung des Hängeschrankes 1 durch ungebührlich hohe Beladung desselben eintreten, ist die Gefahr des Herabfallens des Hängeschrankes 1 immer noch vergleichsweise gering, da in diesem Falle durch Absenkung des Hängeschrankes 1 das Abstützelement 11 des jeweiligen Beschlages 7 sich auf der Oberseite des in diesem Falle schon etwas geneigt verlaufenden Aufhängehakens 6 der Aufhängevorrichtung 5 zusätzlich abstützt, so wie dies in den Figuren 7-10 sehr anschaulich dargestellt ist.

Von großem Vorteil ist, dass Beschläge 7 wie vorstehend beschrieben aufgebaut und angeordnet, auch nachträglich an Hängeschranken mit entsprechenden Aufhängevorrichtungen 5 anbringbar sind und somit die Sicherheit derartiger Hängeschranke erhöht werden kann.

Die Beschläge 7 sind bevorzugt einstückig aus Metall in Form von Stanz-Biegeteilen hergestellt. Somit sind die Fertigungskosten für die Beschläge relativ niedrig, so dass eine beträchtliche Erhöhung der Sicherheit des Hängeschrankes ohne gravierende Kostennachteile erzielt wird.

Bei Hängeschränken mit geringem Eigengewicht und geringer Zuladung kann der Beschlag 7 auch aus Kunststoff hergestellt werden.

Die in den Figuren 7-10 dargestellte Position des Aufhängehakens 6 in Relation zum Abstützelement 11 kann auftreten, wenn der Hängeschrank 1 aus Unbedachtsamkeit enorm überlastet worden ist. Es soll lediglich verdeutlicht werden, dass in einem solchen Falle ein unkontrolliertes Herabfallen des Hängeschrankes nicht ohne weiteres eintreten kann, da durch die Anlage des Abstützelementes 11 am Aufhängehaken 6 eine zusätzliche Abstützung des gesamten Hängeschrankes erfolgt.

Der Aufhängehaken 6 kann ebenfalls zur Anlage an dem Abstützelement 11 kommen, wenn der Abstand des Aufhängehakens 6 zum Abstützelement 11 schon bei der Ausrichtung des Hängeschrankes äußerst gering ist und der Hängeschrank nur gering belastet wird. Es ist insoweit durchaus möglich, dass sich der Aufhängehaken 6 nach dem Ausrichten des Hängeschrankes bereits in Anlage mit der Abstützelement 11 befindet.

Wenn das Abstützelement 11 mit dem Aufhängehaken 6 in Kontakt kommt, ist es durch seine Beschaffenheit dazu geeignet, einen Teil der wirkenden Kräfte in den Beschlag 7 einzuleiten.

Aus statischen Gründen ist es besonders vorteilhaft, wenn die Höhe des Abstützelementes 11 mindestens dem 3fachen der Dicke des Abstützelementes 11 entspricht.

Ausdrücklich sei auch noch einmal darauf hingewiesen, dass der Hängeschrank 1 selbstverständlich in beiden oberen Eckbereichen mit Beschlägen 7 der beschriebenen und dargestellten Art ausgestattet ist.

### Bezugszeichenliste

- 1: Hängeschrank
- 2: Seitenwand
- 3: Oberboden
- 4: Rückwand
- 5: Aufhängevorrichtung
- 6: Aufhängehaken
- 7: Beschlag
- 8: Tragteil
- 9: Halteteil
- 10: Winkelteil
- 11: Abstützelement
- 12: Befestigungsschraube
- 13: Innenseite
- 14: Rückseite
- 15: Oberseite
- 16: Oberseite
- 17: Rückseite
- 18: Rückseite

## Patentansprüche

1. Hängeschrank (1) mit Beschlägen (7) zur Verstärkung seiner mit Aufhängevorrichtungen (5) versehenen oberen, hinteren Eckbereiche, wobei die Aufhängevorrichtungen (5) jeweils mit einem Aufhängehaken (6) versehen sind, **dadurch gekennzeichnet, dass** jeder Beschlag (7) mindestens ein an einer Seitenwand (2) festgelegtes Tragteil (8) und wenigstens ein an einem Oberboden (3) festgelegtes oder den Oberboden (3) nach oben abstützend angeordnetes Halteteil (9) aufweist und dass jeder Beschlag (7) ein Abstützelement (11) aufweist, welches oberhalb des Aufhängehakens (6) angeordnet ist.

2. Hängeschrank nach Anspruch 1, **dadurch gekennzeichnet, dass** der Beschlag (7) einstückig aus Metall hergestellt ist.

3. Hängeschrank nach Anspruch 2, **dadurch gekennzeichnet, dass** der Beschlag (7) als einstückiges Stanz-Biegeteil ausgebildet ist.

4. Hängeschrank nach einem der vorhergehenden Ansprüche, **dadurch gekennzeichnet, dass** der Beschlag (7) durch schrauben, nageln, kleben oder andere im Stand der Technik bekannte Verbindungsmöglichkeiten festgelegt ist.

5. Hängeschrank nach einem der vorhergehenden Ansprüche, **dadurch gekennzeichnet, dass** durch das Halteteil (9) das Widerstandsmoment des Beschlages (7) senkrecht zum Tragteil (8) erhöht ist.

6. Hängeschrank nach einem der vorhergehenden Ansprüche, **dadurch gekennzeichnet, dass** die Höhe des Abstützelementes (11) mindestens dem 3fachen der Dicke des Abstützelementes (11) entspricht.

7. Hängeschrank nach einem der vorhergehenden Ansprüche, **dadurch gekennzeichnet, dass** das Abstützelement (11) bei Kontakt mit dem Aufhängehaken (6) dazu geeignet und bestimmt ist, Kräfte in den Beschlag (7) einzuleiten.

8. Hängeschrank nach einem der vorhergehenden Ansprüche, **dadurch gekennzeichnet, dass** das Abstützelement (11) nach Ausrichtung des Hängeschrankes einen äußerst geringen Abstand zum Aufhängehaken (6) aufweist bzw. auf diesem Aufhängehaken (6) aufliegt.

9. Hängeschrank nach einem der vorhergehenden Ansprüche, **dadurch gekennzeichnet, dass** das Halteteil (9) zusätzlich zu seiner Festlegung am Oberboden (3) auch noch an der Seitenwand (2) festgelegt ist.

10. Hängeschrank nach einem der vorhergehenden Ansprüche, **dadurch gekennzeichnet, dass** das Tragteil (8) an einer rückseitigen Kante einer Seitenwand (2) oder an einer Fläche der Seitenwand (2) festgelegt ist.

11. Hängeschrank nach einem der vorhergehenden Ansprüche, **dadurch gekennzeichnet, dass** das Winkelteil (10) an einer Fläche der Rückwand (4) und/oder des Oberbodens (3) festgelegt ist.

12. Hängeschrank nach Anspruch 1 und einem oder mehreren der nachfolgenden Ansprüche, **dadurch gekennzeichnet, dass** der Beschlag (7) mit einem gegenüber dem Halteteil (9) abgekanteten Winkelteil (10) ausgestattet ist, welches an der Rückseite des Oberbodens und/oder einer Rückwand (4) festgelegt ist.

13. Hängeschrank nach Anspruch 12, **dadurch gekennzeichnet, dass** das Winkelteil (10) und das Tragteil (8) über ein oberhalb des jeweiligen Aufhängehakens (6) liegendes und eine diesen kreuzende Strebe bildendes Abstützelement (11) miteinander verbunden sind.
